# EUROPEAN PATENT APPLICATION

(11) **EP 1 176 079 A2**
(43) Date of publication of application: **30.01.2002**
(21) Application number: 00311382.6
(22) Date of filing: 19.12.2000
(51) Int. Cl.: B62B 3/02

(54) **A pallet side frame and a pallet assembly**

(30) Priority: 02.06.2000 GB 0013533
(71) Applicant: LIN PAC MOULDINGS LIMITED, Birmingham B37 7YN (GB)
(72) Inventor: Mallan, Lee, Hartford, Northwich CVW8 3AQ (GB)
(74) Representative: Green, Mark Charles

(57) **Abstract**

A pallet assembly has a roller pallet 1 with removable side frames 4. The frames 4 comprise tubular plastics support rods 5 extending between which are plastics moulded bridging members 9, 11 and 13 that are secured to the support rods. The bridging members may be secured to the rods by moulding those members directly on to the rods, preferably so that plastics from the bridging members flows into recesses in the rods to provide keys which restrains the bridging members from longitudinal displacement relative to the rods. Alternatively the bridging members may be pre-moulded and secured to the rods by adhesive, bonding, welding or mechanical fasteners which may be snap-engagable or expandable plugs. The lowermost bridging member 9 is moulded to present connection means by which the side frame 4 is fitted to the deck. Several intermediate bridging members 13 can be identical and moulded in a common mould, preferably successively on to the support rods 5.

## Description

### Technical Field and Background Art

The present invention relates to pallet assemblies, typically roller pallets, and side frames for such assemblies.

Pallets as used for the storage, transport and / or display of goods conventionally have a load bearing deck or similar structure which may be mounted on wheels or other rollers for mobility. Plastics moulded decks are typical, especially for roller pallets, and it is well known to provide such decks with upstanding frames for retaining, locating or supporting goods on the deck. Usually the upstanding frames, often known as side frames, are removably mounted on the deck, generally disposed at the periphery of the deck to form an enclosure that extends wholly or partly about that periphery.

Two types of side frames are popular for forming an enclosure on a pallet deck. Firstly there is what is known in the art as a pallet collar; this usually has several walls hingedly connected together at the corners of the pallet with each wall being of a plastics moulded sheet structure so that the collar when removed from the deck can be collapsed into a compact form convenient for storage or transport. Such collars are normally used to provide relatively shallow container structures on the deck, say with the wall height less than one metre. Collars are generally regarded as expensive in view of the manufacturing costs for moulding tools necessary to produce the individual walls from which they are assembled. For this latter reason plastics collars seldom have a height greater than one metre as aforementioned. The second type of side frame is presented as an open structure formed from upstanding metal rods to which wire mesh is welded to provide upstanding side walls and a container on the pallet deck that represents a fully or partially enclosed cage. Metal rod and wire mesh cages are typically made with side frames in the order of two metres high. They too are regarded as relatively expensive to manufacture and are found to be more susceptible to damage and more difficult to clean than side frames of plastics. Nevertheless metal cages as aforementioned are preferred for use where the height of the pallet side frame exceeds that where it is not economically viable or it is inappropriate to use plastics moulded collars. In a typical workshop or store environment it is therefor usual to see roller pallets having metal mesh and rod side frames with a height in the order of 1.5 to 2 metres.

It is an object of the present invention to provide a pallet side frame which alleviates the disadvantages of the aforementioned wire mesh and rod cage-like side frames, can be manufactured simply and economically to a predetermined height and which is of a structure that is robust and lends itself to production in plastics materials.

### Statements of Invention and Advantages

According to the present invention there is provided a pallet side frame comprising two longitudinally extending and laterally spaced support rods and at least two laterally extending and longitudinally spaced plastics moulded bridging members extending between and secured to said support rods, a lowermost part of the frame being provided with connection means for mounting the side frame on a pallet deck with the support rods extending upwardly.

There is further provided a method of manufacturing a pallet side frame which comprises securing to two longitudinally extending and laterally spaced support rods at least two laterally extending plastics moulded bridging members disposed in a longitudinally spaced array, and providing a lowermost one of the bridging members with connection means for mounting the side frame on a pallet deck with the support rods extending upwardly from the lowermost bridging member.

Still further according to the present invention there is provided a pallet assembly comprising a deck (which may be mounted on rollers for mobility) and a side frame as specified as being in accordance with the present invention, the side frame being carried by the deck with the connection means of the lowermost bridging member cooperating with the deck and the support rods extending upwardly therefrom.

By the present invention it is envisaged that the pallet side frame (which will usually, but not necessarily, be intended for location at the periphery of a pallet deck) will have an open structure presented by two laterally spaced, usually parallel, support rods to which are secured two or more longitudinally spaced bridging members each being of a plastics moulded structure. One of these bridging members, that is the lowermost bridging member when the frame is mounted on a pallet deck, is moulded so that as secured to the support rods, it presents connection means by which the side frame may be attached to the pallet deck. These connection means may be moulded integral with the lowermost bridging member and or may be presented by end part lengths of the support rods, for example so that such end part lengths present spigots which engage in complementary sockets in the pallet deck.

With the relatively uncomplicated structure for the pallet side frame of the present invention, the support rods (which are preferably of plastics and even more preferably plastics with glass reinforcement) may be cut to length from stock for providing a side frame of predetermined height and thereafter the bridging members can be secured to the rods. The number and size of the bridging members and the longitudinal spacing between those members is determined as appropriate for the strength and configuration required of the side frame. Usually the support rods will be cut to length from extruded tubular stock.

One or more of the bridging members may be moulded onto the support rods. This is preferred for manufacturing convenience and commercial viability. When two or more identical bridging members are moulded on to the support rods it is preferred that they are moulded in a common moulding tool relative to which the support rods are longitudinally displaced for successively moulding each of the identical bridging members at predetermined longitudinally spaced positions on the rods. A bridging member that is moulded on to the support rods may be secured to those rods by plastics of that member keying into or onto the rods during the moulding process. In a preferred arrangement the rods are provided with laterally extending recesses such as holes into which the plastics is moulded to provide the aforementioned key. In the event that these laterally extending recesses open into the bores of tubular rods, internal sleeves or bungs may be provided in the bores of the tubular support rods to obturate the recesses and alleviate plastics material from flowing into the bores of the tubular rods. The internal bungs or sleeves may also serve to reinforce the structure of the support rods.

As an alternative to moulding the bridging members on to the support rods, the bridging members may be pre-moulded remotely from the support rods and secured to those rods by adhesive, welding, bonding or by locking means. Usually the moulded bridging member will be provided with seatings in which the support rods may be accommodated (in a wholly or partially complementary manner), and secured. In a preferred arrangement the seatings include opposed flanges of the bridging member.

The flanges are arranged to straddle the respective support rod and the securing of the support rods to the bridging member is by locking means in the form of fasteners or fixings which can conveniently engage between the flanges to retain the bars in the seatings. Preferably the fasteners or fixings cooperate with both the support rods and the flanges to retain the respective bridging member from longitudinal displacement relative to the support rods.

Where a bridging member is moulded remotely from the support rods and is to provide an uppermost or the lowermost bridging member of the side frame, that bridging member can be provided with seatings which receive end part lengths of the support rods so that those end part lengths are secured in socket and spigot relationship with the uppermost or lowermost bridging member. In a preferred such arrangement where the support rods are tubular, those rods are secured by locking means which comprise expandable plugs that engage within the bores of the rods.

Preferably the support rods are provided with longitudinally extending external keys such as ribs or channels with which the bridging members cooperate to restrain rotation of the rods about their longitudinal axis relative to the respective bridging members. The locking means on plastics of the moulded on bridging member may co-operate with the keys to restrain longitudinal displacement of the respective bridging member relative to the support rods.

### Drawings

One embodiment of a pallet side frame and pallet assembly constructed in accordance with the present invention will now be described, by way of example only, with reference to the accompanying illustrative drawings in which;
Figure 1 is a perspective view of the pallet assembly which includes two identical side frames:
Figures 2 and 3 are side and end views respectively of the assembly shown in Figure 1;
Figure 4 is a perspective view of a pallet side frame in accordance with the present invention shown removed from the deck of the pallet assembly in Figure 1;
Figure 5 is a scrap view of part of the frame shown in Figure 4 and diagrammatically illustrates, in part section, an upmost bridging member and an intermediate bridging member of that frame;
Figure 6 is a section of the frame part taken on the line VI-VI of Figure 5;
Figure 7 diagrammatically shows, in perspective, an exploded view of part of the lowermost bridging member of the frame and illustrates the manner in which that bridging member is secured to a support rod;
Figure 8 shows an upper part of the side frame and diagrammatically illustrates an alternative technique by which the uppermost bridging member can be secured to a support rod;
Figure 9 is a section of the frame part taken on the line IX-IX of Figure 8;
Figure 10 diagrammatically illustrates a support rod for use in the securing arrangement as shown in Figures 8 and 9;
Figure 11 is a perspective view of part of the side frame similar to that shown in Figure 8 and illustrates a modified securing means similar to that utilised in Figure 8 for securing an intermediate bridging member to a support rod; and
Figure 12 is a perspective view of the lowermost bridging member on the side frame and diagrammatically illustrates a modified technique for securing that bridging member to the support rod, which technique is similar to that employed in the arrangement in Figure 8.

### Detailed Description of Drawings

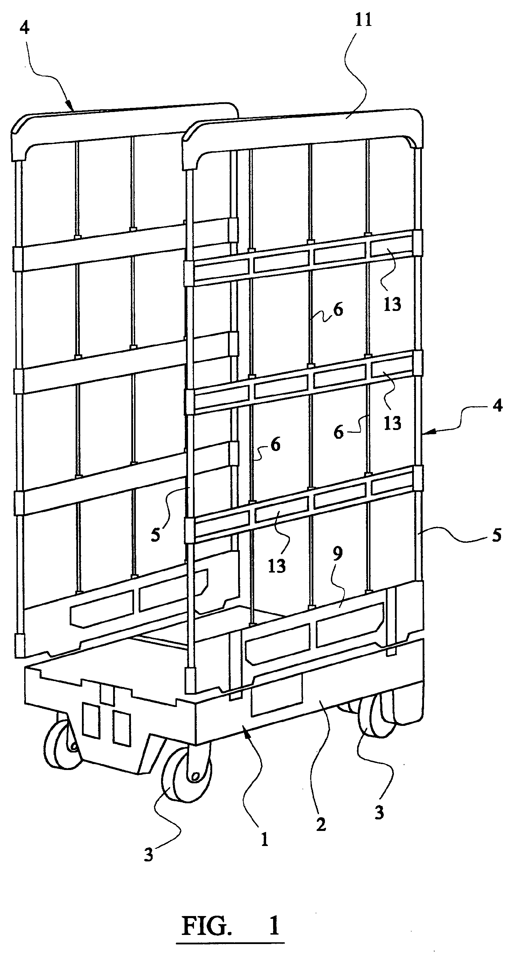

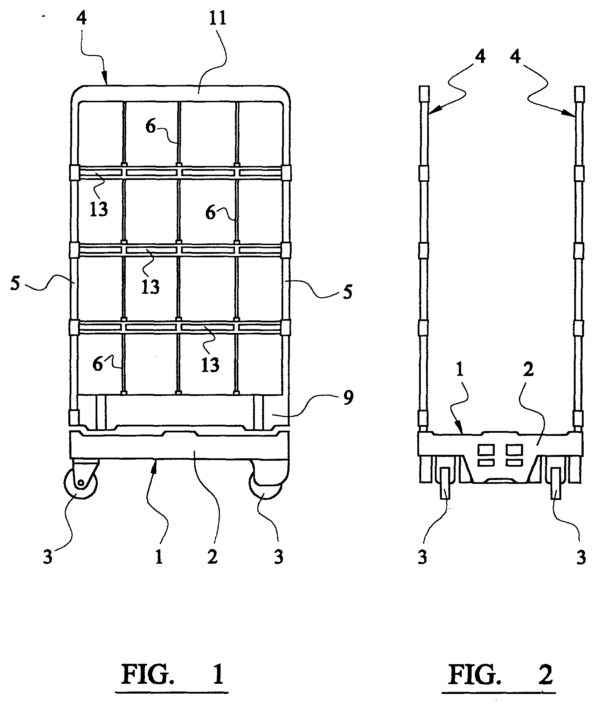

Figures 1 to 3 show a pallet assembly constructed in accordance with the present invention, the components of which are predominantly plastics mouldings. The assembly has a roller pallet 1 formed by a deck 2 carried by wheels/castors 3 for mobility. The deck 2 is generally rectangular in plan and removably mounted at marginal edges along a pair of opposed sides of the deck are a pair of identical side frames 4. In plan the deck 2 presents an oblong rectangle approximately 0.75 metres by 1 metre whilst the frames 4 extend vertically above the deck to a height of approximately 2 metres. The side frames 4 present an open ended cage-like structure for retaining or supporting goods on deck 2. It will be appreciated that further side/end frames may be provided on the deck so that the four frames close the cage-like structure about the periphery of the deck (usually an end frame when provided will be hingedly mounted on one of the frames shown so that it can be opened to permit access to the interior of the cage).

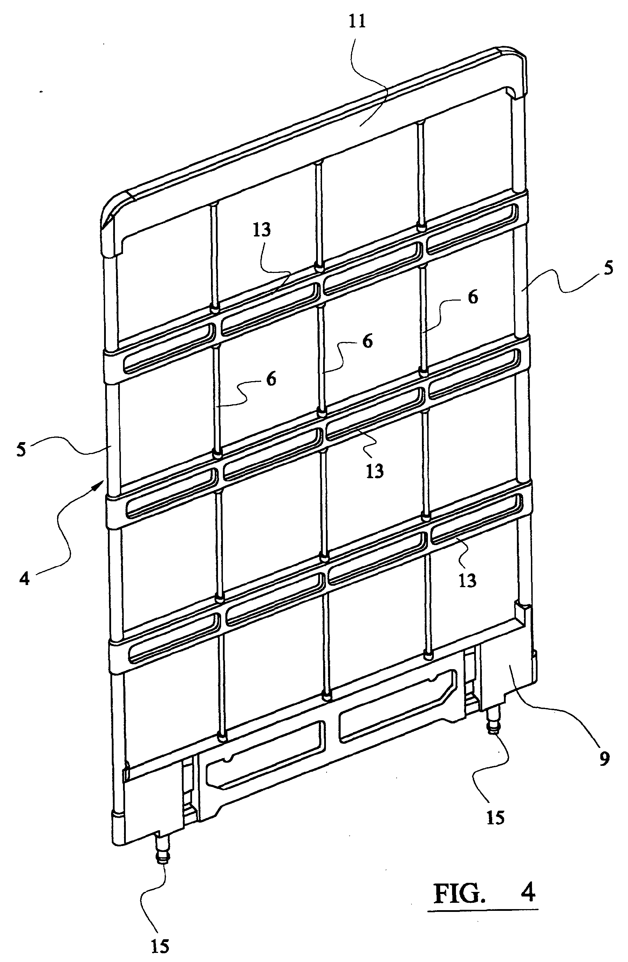

Each side frame 4 (see Figure 4) has an array of parallel, laterally spaced and longitudinally extending support rods which consist of a pair of outer support rods 5 and three inner support rods 6. The 5 support rods are straight, cylindrical and cut to length from extrusions of glass reinforced plastics.

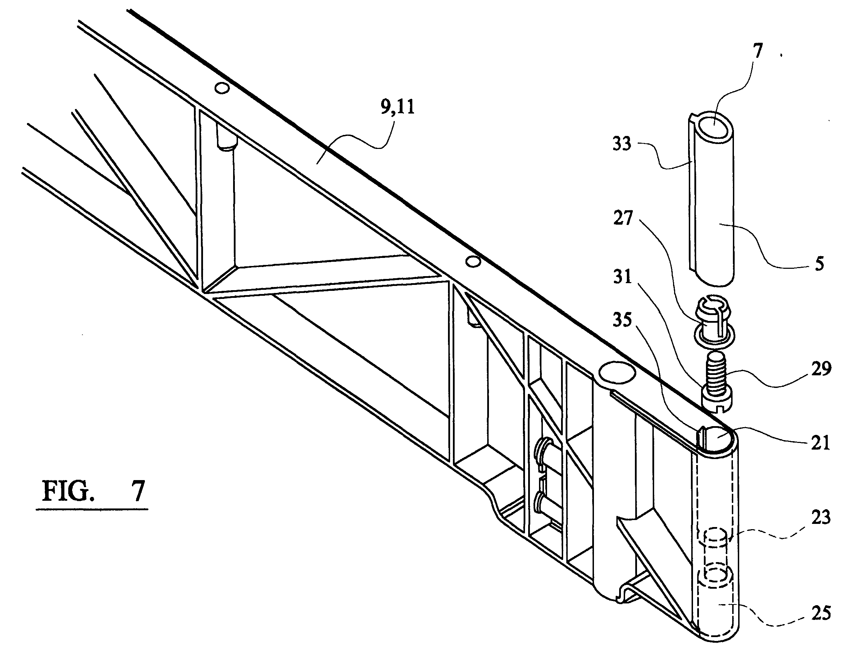

The inner rods 6 are solid whilst the outer rods 5 are tubular to provide a cylindrical bore 7 (see Figure 6). Extending laterally between the support rods 5 and 6 and spaced longitudinally over those rods is an array of parallel bridging members which present a lowermost such member 9, an uppermost bridging member 11 and three intermediate bridging members 13 disposed so that the mesh 4 presents a generally symmetrical open rectangular mesh structure.

The five bridging members 9, 11 and 13 are formed as injection mouldings in plastics and are rigidly secured to the outer support rods 5 and preferably, but not necessarily, to the inner support rods 6. The intermediate bridging members 13 are identical to each other whilst the uppermost bridging member 11 is moulded to a slightly different shape for aesthetic purposes at the top of the frame (although it will be appreciated that the uppermost bridging member 11 could be the same as an intermediate bridging member 13). The lowermost bridging member 9 is moulded to provide connecting means by which the side frame 4 is mounted on the deck 2; consequently the member 9 is generally more robust than the other bridging members and, in the example shown in Figure 4, is provided with a pair of moulded-on spigots 15. These spigots 15 are arranged to engage and be captured in complimentary sockets (not shown) in the deck 2 for the purpose of connecting the side frame as part of the pallet assembly. It will be appreciated that the connection between the side frame and the pallet deck may be effected other than by the moulded-on spigots 15, for example the tubular support rods 5 may project downwardly through the lowermost bridging member 7 so that the lower ends of those rods present spigots which can be engaged and releasably retained in sockets in the deck 2.

It will be seen from Figure 4 that the tubular support rods 5 have a diameter considerably greater than the support rods 6; the reason for this is that the outer rods 5 provide the major load bearing structure and rigidity for the side frame whilst the inner support rods 6 predominantly serve to close the open frame structure whilst providing some support for that structure.

The bridging members 9, 11 and 13 can be secured to the support rods in several different ways, these include the use of the adhesive, welding or bonding techniques. Preferably, however, the securing technique is either by moulding a bridging member directly on to the support rods 5 particularly the outer support rods or by use of mechanical locking devices.

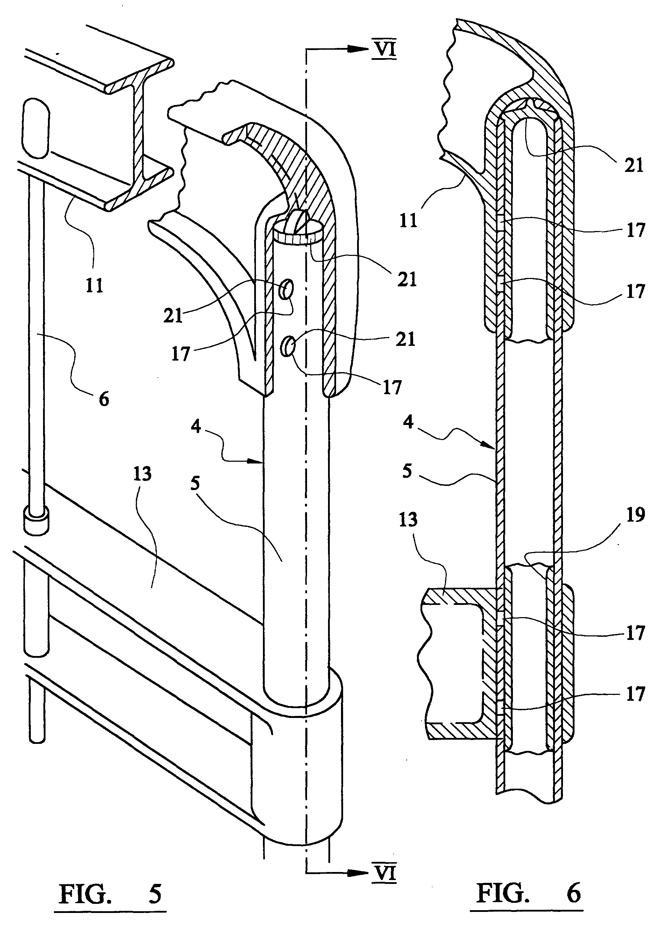

In the arrangement shown in Figures 5 and 6 the bridging members are moulded on to the support rods. More particularly the five support rods are disposed in the required parallel array with common ends thereof projecting as inserts into a moulding tool (not shown) by which the uppermost bridging member 11 is injection moulded on to the support rods 5 and 6 as shown in Figures 5 and 6. The support rods carrying the uppermost bridging member 11 can now be located to project as inserts through a second moulding tool by which an intermediate bridging member 13 is moulded on to the support rods with that member 13 spaced longitudinally over the rods from and parallel with the uppermost bridging member 11. Following moulding of the first intermediate bridging member 13, that member can be removed (on the support rods from its moulding tool and the support rods) displaced longitudinally relative to that moulding tool for a second intermediate bridging member 13 to be moulded successively in that tool, following which the third intermediate bridging member 13 can be moulded in the same tool. It will be appreciated that by use of this latter moulding technique as many intermediate bridging members 13 as may be required can be formed on the support rods in a relatively simple and economically viable manner. Finally, the lowermost ends of the support rods are located as inserts in a third moulding tool by which the lowermost insert 9 is moulded on to the support rods. The aforementioned moulding-on fabricating technique allows the side frame 4 to be constructed with the use of three injection mouldings tools (or possibly with two such tools if it is aesthetically acceptable for the uppermost bridging member 11 to be of the same design as an intermediate bridging member 13). It will be appreciated that the sequence in which the different bridging members are moulded on to the support rods is not likely to be critical provided that the required flat rectangular structure of the side frame 4 is achieved.

As the bridging members 9, 11 and 13 are being moulded on to the support rods 5 and 6 there will be some bonding between the plastics of the bridging members and the plastics of the support rods. It is preferred however that the plastics of the bridging members is keyed to the support rods, particularly the larger diameter outer rods 5 to ensure that the bridging members are restrained from longitudinal displacement relative to the support rods. In the arrangement as shown in Figures 5 and 6 the tubular support rods 5 have recesses presented by holes 17 extending radially through the wall of the rod. As the plastics material of the bridging members is moulded about the support rods 5, such material enters the holes 17 and solidifies therein as spigots to prevent longitudinal displacement between the support rods and respective bridgings members.

It will be seen from Figure 6 that each tubular support rod 5 has in its bore 7 a close fitting cylindrical sleeve 19 (which may be of plastics or metal). The internal sleeve 19 is located longitudinally within the support rod so that it obturates the ends of the holes 17 where they open into the bore of the rod. Consequently during the moulding-on process the plastics flow for the key is restricted to the wall thickness of the rods 5 thereby alleviating loss/waste of plastics through the bore 7 of the rods 5. In addition the upper and lower end part lengths of the tubular rods 4 are provided with hollow, metal or plastics plugs 21 which are received closely in the bore 7 of the tubular rod to close the ends of that bore and also to obturate the inner ends of the holes 17 associated with the keying of the uppermost and lowermost bridging members to the tubular rods. The plugs 21 thus serve to alleviate loss/wastage of plastics material through the bore 7 of the tubular support rods at the ends of those rods and also through the keying holes 17 during the moulding-on of the lowermost and uppermost bridging members 9 and 11. Furthermore, the longitudinal extent of the sleeve or sleeves 19 and the plugs 21 serve as localised reinforcement for the tubular support rods 5.

Figure 7 shows use of a mechanical lock device by which the uppermost or the lowermost bridging member 9,11 may be secured to a tubular support rod 5. For this the bridging member is provided with a seating in the form of a generally cylindrical socket 21 which is complementary to and within which an end of the tubular support rod 5 is received. The inner end or bottom of the socket 21 is presented by an annular flange 23 through the bore of which the socket 21 communicates with a cylindrical recess 25 that opens on the side of the bridging member remote from the socket 21. Located within the socket 21, sitting on the flange 23, is a metal or plastics screw threaded expandable nut 27. Engageable with the nut 27 is a screw threaded rotatable bolt 29 having a head 31. The bolt is fitted in the recess 25 for its screw threaded shank to pass through the bore formed by the annular flange 23 and to screw threadedly engage with the expandable nut 27 (whilst the head 31 of the bolt is retained by the flange 23 within the recess 25). The end of the tubular support rod 5 is pushed as a close sliding fit into the socket 21 so that the expandable nut 27 is received within the end of the bore 7. In this latter condition the shank of the bolt 29 is rotated to be threaded into the nut 27 causing the latter to expand radially in the bore 7 of the rod 5. This locks the support rod 5 to the bridging member 9 or 11 when the bolt is threaded fully into the expandable nut so that the head 31 of the bolt abuts firmly against the flange 23 within the recess 25.

It will be seen from Figure 7 that the support rod 5 is provided with a longitudinally extending external key in the form of a rib 33. This key 33 cooperates with a complementary keyway or channel 35 opening in the socket 21 as the end of the support rod 5 is pressed fully into the socket 21 and into engagement with the expandable nut 27. Engagement between the key 33 and keyway 35 restrains relative rotation between the bridging member and the tubular support rod 5 about the axis of that rod. The key 33 which is extruded along the length of the rod 5 can therefore be used as a reference or datum for ensuring that bridging members which are subsequently secured to the tubular support rods are orientated correctly to provide a required flat and rectangular configuration for the side frame.

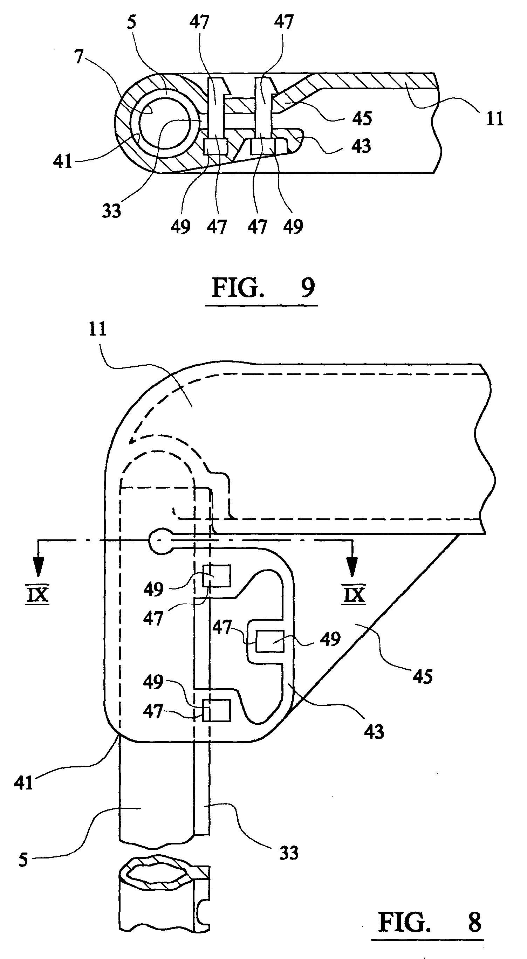

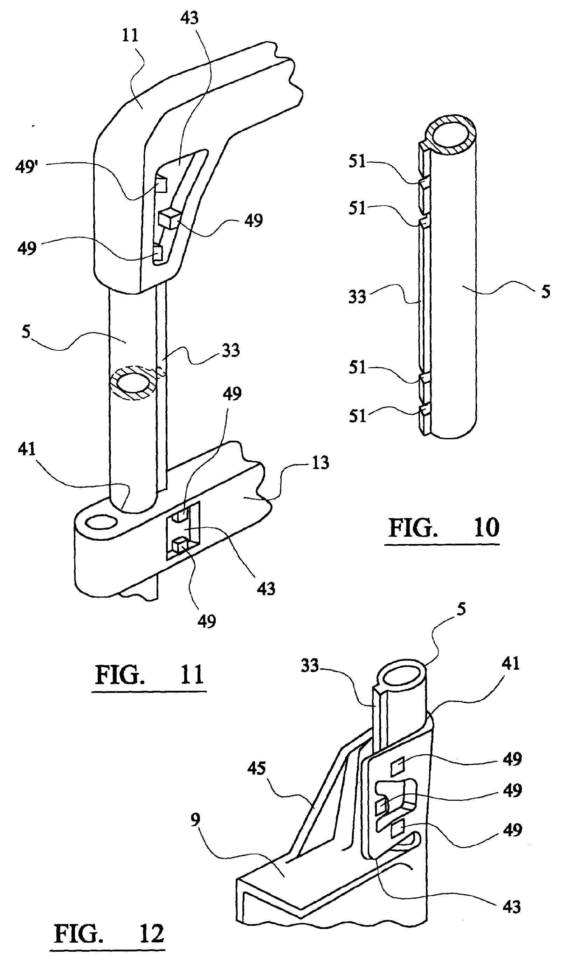

A bridging member such as that shown in Figure 7 (which is pre-moulded remotely from the support rods) can alternatively be secured to the support rods by a mechanical locking arrangement which will now be described with reference to Figures 8 to 12. In Figures 8 and 9 the uppermost bridging member 11 is moulded to include a part cylindrical seating 41 which serves as a socket within which is received the upper end part length of a tubular support rod 5. With the support rod seated in the socket 41, opposed flange parts 43 and 45 of the bridging member 11 straddle the support rod 5 so that the longitudinally extending keying rib 33 on the support rod is captured between the flanges 43 and 45. as shown in Figure 9. The opposed flanges 43 and 45 are each provided with a set of three holes 47 which correspond on the two flanges 43 and 45. The three holes on the two flanges coincide to permit three barbed fasteners to be press-fitted one through each pair of coinciding holes 47 so that the barbed fasteners 49 snap engage as secure fitments between the flanges 43 and 45. The resilience of the plastics material for the bridging member 11 permits snap engagement of the fasteners 49 so that the socket seating 41 is biassed firmly into engagement with the part length of the support rod 5 which it receives. In this arrangement longitudinal displacement between the bridging member 11 and the support rod 5 is restrained by engagement of one or more of the fasteners 49 with the keying rib 33. More particularly the longitudinal rib 33 on the support rod 5 is provided with longitudinally spaced rectangular recesses 51 to present a toothed configuration on the rod 5 (see Figure 10). These recesses 51 are located to coincide with pairs of coinciding apertures 47 in the opposed flanges 43 and 45. When the fasteners 49 are press-fitted to snap engage between the flanges 43 and 45, one or more of the fasteners 49 (in Figure 8, two of the three fasteners) engage with the recesses 51 in the rib 33 and this engagement prevents longitudinal displacement of the rod 5 relative to the uppermost bridging member 11. Preferably, but not essentially, the recesses 51 and apertures 47 are of rectangular profile and the fasteners 49 have rectangularly sectioned shanks which are complementary to the apertures 47 and recesses 51 to provide a close sliding fit therewith and firm retention of the bridging member on the support rods.

Figure 11 shows the uppermost bridging member 11 secured to the tubular support rod 5 in the manner described with reference to Figures 8,9 and 10. It also shows an intermediate bridging member 13 secured to the support rod 5 in a similar manner utilising barbed fasteners 49 which snap engage between opposed flanges 43 and 47 of the bridging member 13 about the support rod 5 so that shanks of the fasteners 49 cooperate with recesses 51 in the rib 33. Figure 12 shows the lowermost pre-moulded bridging member 9 secured to the lowermost end of the support rod 5 by snap engaging fasteners 49 in an identical manner to that described for the uppermost bridging member 11 in Figures 8 and 9.

## Claims

1. A pallet side frame comprising two longitudinally extending and laterally spaced support rods and at least two laterally extending and longitudinally spaced plastics moulded bridging members extending between and secured to said support rods, a lowermost part of the frame being provided with connection means for mounting the side frame on a pallet deck with the support rods extending upwardly.

2. A frame as claimed in Claim 1 wherein the lowermost one of said bridging members is provided with said connection means.

3. A frame as claimed in Claim 1 or Claim 2 in which the connection means is moulded integral with the lowermost bridging member.

4. A frame as claimed in any one of the preceding claims in which the connection means comprises end part lengths of the support rods projecting from the lowermost bridging member.

5. A frame as claimed in one of the preceding claims in which at least one of the bridging members is moulded on to the support rods.

6. A frame as claimed in Claim 5 in which the rods are provided with laterally extending recesses into which the plastics is moulded.

7. A frame as claimed in any one of the preceding claims in which at least one of the bridging members is pre-moulded remote from the support rods and is secured to the support rods by adhesive, welding, bonding or locking means.

8. A frame as claimed in Claim 7 in which the pre-moulded bridging member is provided with seatings within which the rods are accommodated.

9. A frame as claimed in Claim 8 in which the seating comprises opposed flanges of the bridging member which straddle the respective support rods and said locking means comprises fasteners or fixings which engage between said flanges to retain the support rods in the seatings.

10. A frame as claimed in any one of the preceding claims in which the support rods have longitudinally extending external keys with which the bridging members cooperate to restrain relative rotation between the bridging members and the support rods about the longitudinally axes of the support rods.

11. A frame as claimed in any one of the preceding claims and having at least three bridging members consisting of an uppermost bridging member, the lowermost bridging member and at least one intermediate bridging member, the uppermost and lowermost bridging members being secured to the end part lengths of the rods to overlie the respective ends of the rods and at least the or each intermediate bridging member being moulded on to the support rods.

12. A frame as claimed in Claim 22 in which at least two of the bridging members are identical.

13. A method of manufacturing a pallet side frame which comprises securing to two longitudinally extending and laterally spaced support rods at least two laterally extending plastics moulded bridging members disposed in a longitudinally spaced array, and providing a lowermost one of the bridging members with connection means for mounting the side frame on a pallet deck with the support rods extending upwardly from the lowermost bridging member.

14. A pallet side frame when manufactured by the method as claimed in Claims 13.

15. A pallet assembly comprising a deck and a side frame as claimed in Claim 1 said side frame being carried by the deck with the connection means of the lowermost bridging member cooperating with the deck and the support rods extending upwardly therefrom.

16. A pallet assembly as claimed in Claim 15 and comprising at least two said side frames to provide a cage or part cage-like structure on the deck.
